# FASCICULE DE BREVET EUROPEEN

(11) **EP 2 193 064 B1**
(45) Date de publication et mention de la délivrance du brevet: **08.06.2011**
(21) Numéro de dépôt: 08827056.6
(22) Date de dépôt: 17.07.2008
(51) Int. Cl.: B62D 21/15, B62D 25/08

(54) **ENSEMBLE DE CARROSSERIE DE VEHICULE**
KAROSSERIEAUFBAU FÜR EIN FAHRZEUG
BODYWORK ASSEMBLY FOR VEHICLE

(30) Priorité: 31.07.2007 FR 0756849
(43) Date de publication de la demande: 09.06.2010
(73) Titulaire: Peugeot Citroën Automobiles SA, 78140 Vélizy-Villacoublay (FR)
(72) Inventeur: DIAW, Baye, F-25420 Courcelles Les Montbeliard (FR); CHERON, Michel, F-90000 Belfort (FR)
(74) Mandataire: Allain, Laurent
(86) Numéro de dépôt international: PCT/FR2008/051340
(87) Numéro de publication internationale: WO 2009/019384

(56) Documents cités:
- EP-A- 0 990 577
- FR-A- 2 813 271
- JP-A- 10 001 069
- US-A1- 2005 046 237

## Description

La présente invention concerne un ensemble de carrosserie de véhicule, en particulier de véhicule automobile, ainsi qu'un véhicule équipé d'un tel ensemble de carrosserie.

Le document FR-A-2 813 271 divulgue un ensemble de carrosserie de véhicule du type comprenant un élément de structure de caisse servant de support pour une aile du véhicule. L'élément de structure de caisse est disposé en amont du pied avant du véhicule, pied avant qui sert à supporter les charnières d'un ouvrant avant du véhicule. L'élément de structure de caisse supporte une cloche porteuse d'éléments de suspension. Un choc frontal subit par le véhicule entraîne la déformation de la carrosserie et, en particulier, la déformation et la rotation des cloches et la déformation du pied avant. De telles déformations peuvent entraîner un désalignement des ouvrants qui ne sont plus susceptibles de s'opposer aux efforts de compression et peut entraîner une déformation de l'habitacle ou une pénétration des cloches dans l'habitacle au risque de blesser les occupants. Pour remédier à ces inconvénients le document cité prévoit la mise en place d'un premier élément de renfort sur l'extérieur de l'élément de structure de caisse en arrière de la cloche et d'un deuxième élément de renfort dans l'alignement et en arrière de la cloche. La solution envisagée par ce document nécessite la mise en place de deux éléments de renfort et ne permet pas de limiter suffisamment la rotation du pied avant en cas de choc frontal.

En outre, la fixation d'un raidisseur sur une doublure d'aile permet de retarder l'initiation de la rotation du pied avant mais une fois déstabilisé en Y, le raidisseur accentue la rotation du pied avant et les intrusions des éléments du bloc moteur dans l'habitacle.

L'invention a pour but de remédier aux inconvénients mentionnés ci-dessus en proposant un ensemble de carrosserie de véhicule.

A cet effet, la présente invention concerne un ensemble de carrosserie d'un véhicule comprenant:
- un côté d'habitacle,
- une doublure d'aile fixée sur le côté d'habitacle et délimitant avec ledit côté d'habitacle, un corps creux,
- un tablier fixé à la doublure d'aile,
- un renfort de pied servant de renfort à un pied avant du véhicule, le renfort de pied s'étendant entre la doublure d'aile et le côté d'habitacle,
ledit ensemble de carrosserie étant caractérisé en ce qu'il comprend un raidisseur fixé audit côté d'habitacle et disposé à l'intérieur du corps creux.

Avantageusement, la forme du raidisseur est telle que, dans la direction transversale Y du véhicule, le raidisseur remplit sensiblement le corps creux.

Avantageusement, le raidisseur est adjacent au renfort de pied.

Avantageusement, le raidisseur est une tôle ondulée.

L'invention concerne également un véhicule automobile comprenant un ensemble de carrosserie selon l'une des variantes précédentes.

L'invention sera mieux comprise, et d'autres buts, caractéristiques, détails et avantages de celle-ci apparaîtront plus clairement au cours de la description explicative qui va suivre, faite en référence aux dessins schématiques annexés, donnés uniquement à titre d'exemple illustrant un mode de réalisation de l'invention et dans lesquels :
- la figure 1 représente une vue de côté d'un ensemble de carrosserie de véhicule selon l'invention,
- la figure 2 représente une coupe selon la ligne II-II de la figure 1 de l'ensemble de carrosserie selon l'invention,
- la figure 3 est une vue similaire à la vue de la figure 2 pour un ensemble de carrosserie de véhicule de l'état de la technique,
- la figure 4 est une vue de l'ensemble de carrosserie de véhicule de la figure 4 après un choc frontal,
- la figure 5 est identique à la figure 2,
- la figure 6 est une vue de l'ensemble de carrosserie de véhicule de la figure 5 après un choc frontal, et
- la figure 7 est un agrandissement de la figure 6.

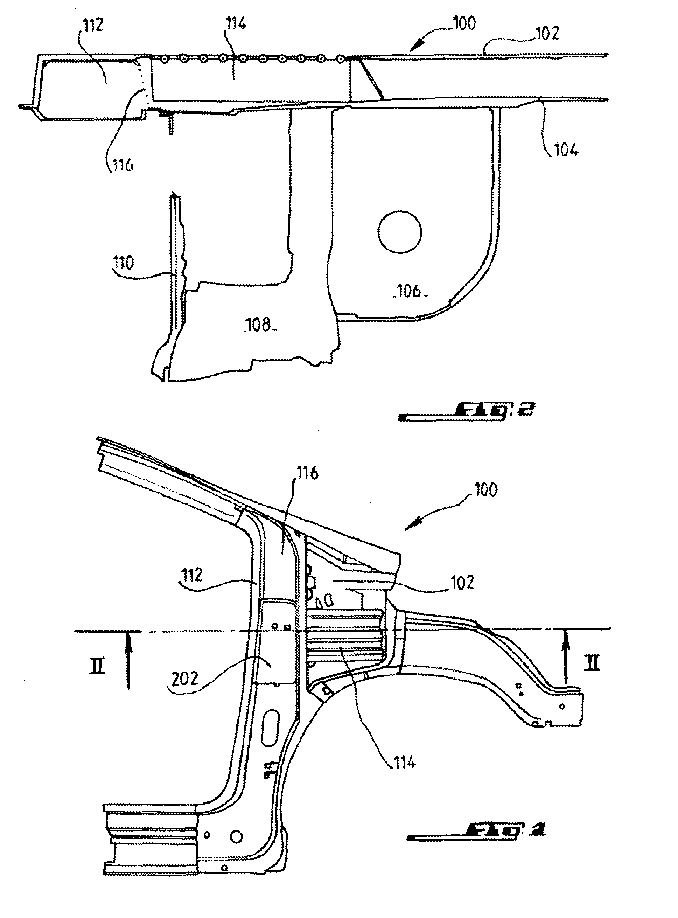

La figure 1 représente un ensemble de carrosserie de véhicule 100 qui comprend un côté d'habitacle 102, une doublure d'aile 104 (figure 2), un tablier 110, et un renfort de pied 116 servant de renfort à un pied avant 112 du véhicule, le renfort de pied 116 s'étendant entre la doublure d'aile 104 et le côté d'habitacle 102. Le côté d'habitacle 102 est la tôle qui forme la structure latérale du véhicule et qui se trouve sous les éléments d'habillage comme par exemple l'aile du véhicule. La doublure d'aile 104 est fixée sur le côté habitacle 102 du côté intérieur du véhicule et délimite avec le côté d'habitacle 102, un corps creux. Le tablier 110 est fixé à la doublure d'aile 104. Le pied avant 112 porte l'ouvrant avant qui est fixé au véhicule par l'intermédiaire d'une charnière et d'un renfort de charnière 202.

L'ensemble de carrosserie 100 selon l'invention comprend un raidisseur 114 fixé au côté d'habitacle 102 et fixé du côté intérieur du véhicule audit côté d'habitacle 102, c'est-à-dire dans le corps creux. Le côté d'habitacle 102 et la doublure d'aile 104 forme ainsi le corps creux à l'intérieur duquel est disposé le raidisseur 114.

Vers l'intérieur du véhicule, sont également fixés un support de suspension 106 pour une roue avant et une doublure de travers inférieure de baie 108. Le tablier avant 110 sépare le compartiment moteur de l'habitacle du véhicule.

Le raidisseur 114 se présente sous la forme d'une tôle ondulée qui s'étend en amont du pied avant 112, et, plus particulièrement, en amont du renfort de pied 116. L'épaisseur du raidisseur 114 est telle que, dans la direction transversale Y du véhicule, le raidisseur 114 remplit sensiblement le corps creux et s'étend sur tout la largeur du pied avant 112. La longueur du raidisseur 114 est telle que, dans la direction longitudinale X du véhicule, le raidisseur 114 s'étend sensiblement du support de suspension 106 au renfort de pied 116. Le raidisseur 114 est adjacent au renfort de pied 116.

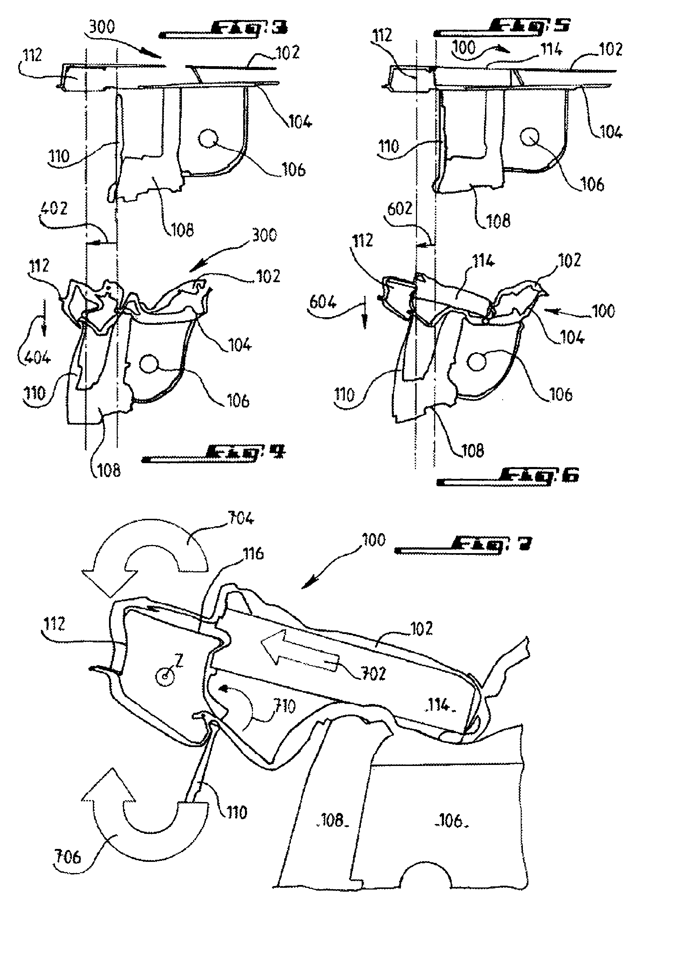

La figure 3 et la figure 4 montrent un ensemble de carrosserie 300 de l'état de la technique dont les éléments communs avec l'ensemble de carrosserie 100 selon l'invention portent les mêmes références. La figure 3 montre l'ensemble de carrosserie 300 avant un choc frontal. La figure 4 montre l'ensemble de carrosserie 300 après un choc frontal. Sous l'effet du choc frontal, la zone auvent délimitée par l'environnement avant et arrière de la doublure de travers inférieure de baie 108 se déforme sous la poussée d'éléments du bloc avant comme par exemple le moteur. Cette déformation génère une rotation du pied avant 112 qui entraîne un recul longitudinal en X représenté par la flèche référencée 402 et un recul transversal en Y représenté par la flèche référencée 404 du point d'attache du tablier 110 sur la doublure d'aile 104 et donc une augmentation des intrusions des éléments du compartiment moteur dans l'habitacle du véhicule.

La figure 5 montre l'ensemble de carrosserie 100 avant un choc frontal. La figure 6 montre l'ensemble de carrosserie 100 après un choc frontal. Comme cela est mieux vu sur la figure 7, en cas de choc, le raidisseur 114 subit un déplacement 702 et vient en appui contre le renfort de pied 116 et il appuie sur l'extérieur du renfort de pied 116. Cette mise en appui du raidisseur 114 contre le renfort de pied 116 génère une contre-rotation 704 (ici dans le sens anti-horaire) du pied avant 112 autour de l'axe Z du véhicule. Tandis que, comme dans le cas d'un ensemble de carrosserie de l'état de la technique, la traction du tablier 110 sous l'effet du choc génère une rotation 706 (ici dans le sens horaire) du pied avant 112 autour de l'axe Z du véhicule. La contre-rotation 704 crée, au point d'attache du tablier 110 sur la doublure d'aile 104, une rotation incidente 710 qui vient contrer la rotation 706 et vient mettre le tablier 110 en tension, limitant ainsi les intrusions des éléments du compartiment moteur dans l'habitacle du véhicule. Comme cela est montré sur la figure 6, la déformation de l'ensemble de carrosserie 100 et, en particulier, le recul longitudinal en X représenté par la flèche référencée 602 et le recul transversal en Y représenté par la flèche référencée 604 du point d'attache du tablier sur la doublure d'aile 104 sont réduits. La fixation du raidisseur 114 sur le côté d'habitacle 102 permet de contrer la rotation du pied avant 112 autour de l'axe Z du véhicule qui intervient lors d'un choc frontal.

La fixation du raidisseur 114 sur le côté d'habitacle 102 et non sur la doublure d'aile 104 permet un découplage du renfort de pied 116 et du bloc avant, assurant ainsi une excellente robustesse de l'ensemble de carrosserie 100. La géométrie du raidisseur 114 peut être facilement modulée en fonction du volume du corps creux. La géométrie du raidisseur 114 permet un gain de masse. En particulier, la section en oméga du raidisseur permet d'avoir une raideur en compression importante et un bon appui sur toute la largeur du pied avant 112 et sur la partie du renfort de pied 116 qui s'étend entre le côté d'habitacle 102 et la doublure d'aile 104. Le raidisseur 114 peut être réalisé en une pièce pliée ou emboutie.

## Revendications

1. Ensemble de carrosserie (100) d'un véhicule comprenant:
- un côté d'habitacle (102),
- une doublure d'aile (104) fixée sur le côté d'habitacle (102) et délimitant avec ledit, côté d'habitacle (102), un corps creux,
- un tablier (110) fixé à la doublure d'aile (104),
- un renfort de pied (116) servant de renfort à un pied avant (112) du véhicule, le renfort de pied (116) s'étendant entre la doublure d'aile (104) et le côté d'habitacle (102),
ledit ensemble de carrosserie (100) étant **caractérisé en ce qu'**il comprend un raidisseur (114) fixé audit côté d'habitacle (102) et disposé à l'intérieur du corps creux.

2. Ensemble de carrosserie (100) selon la revendication 1, **caractérisé en ce que** la forme du raidisseur (114) est telle que, dans la direction transversale Y du véhicule, le raidisseur (114) remplit sensiblement le corps creux.

3. Ensemble de carrosserie (100) selon l'une des revendications 1 ou 2, **caractérisé en ce que** le raidisseur (114) est adjacent au renfort de pied (116).

4. Ensemble de carrosserie (100) selon l'une des revendications 1 à 3, **caractérisé en ce que** le raidisseur (114) est une tôle ondulée.

5. Véhicule automobile comprenant un ensemble de carrosserie (100) selon l'une des revendications précédentes.

## Claims

1. Body assembly (100) of a vehicle, comprising:
- a passenger compartment side (102),
- a fender skirt (104) fixed to the passenger compartment side (102) and defining, together with said passenger compartment side (102), a hollow body,
- a firewall (110) fixed to the fender skirt (104),
- a pillar reinforcement (116) used to reinforce a front pillar (112) of the vehicle, the pillar reinforcement (116) extending between the fender skirt (104) and the passenger compartment side (102),
said body assembly (100) being **characterised in that** it comprises a stiffener (114) which is fixed to said passenger compartment side (102) and arranged inside the hollow body.

2. Body assembly (100) according to claim 1, **characterised in that** the shape of the stiffener (114) is such that, in the transverse direction Y of the vehicle, the stiffener (114) substantially fills the hollow body.

3. Body assembly (100) according to either claim 1 or claim 2, **characterised in that** the stiffener (114) is adjacent to the pillar reinforcement (116).

4. Body assembly (100) according to any one of claims 1 to 3, **characterised in that** the stiffener (114) is a corrugated metal sheet.

5. Motor vehicle comprising a body assembly (100) according to any one of the preceding claims.

## Patentansprüche

1. Fahrzeugaufbaueinheit (100) umfassend,
- einen Seitenteil der Fahrgastzelle (102),
- eine Aufdoppelung des Kotflügels (104), die am Seitenteil der Fahrgastzelle (102) befestigt ist und mit dem Seitenteil der Fahrgastzelle (102) einen Hohlkörper abgrenzt,
- eine Schürze (110), die an der Aufdoppelung des Kotflügels (104) befestigt ist,
- eine Säulenverstärkung (116), die als Verstärkung einer A-Säule (112) eines Fahrzeugs dient, wobei sich die Säulenverstärkung (116) zwischen der Aufdoppelung des Kotflügels (104) und dem Seitenteil der Fahrgastzelle (102) erstreckt,
wobei die Fahrzeugaufbaueinheit (100) **dadurch gekennzeichnet ist, dass** sie eine Versteifung (114) umfasst, die am Seitenteil der Fahrgastzelle (102) befestigt und im Inneren des Hohlkörpers angeordnet ist.

2. Fahrzeugaufbaueinheit (100) nach Anspruch 1, **dadurch gekennzeichnet, dass** die Versteifung (114) so geformt ist, dass die Versteifung (114) in der Y-Querrichtung des Fahrzeugs den Hohlkörper im Wesentlichen ausfüllt.

3. Fahrzeugaufbaueinheit (100) nach einem der Ansprüche 1 oder 2, **dadurch gekennzeichnet, dass** die Versteifung (114) an die Säulenverstärkung (116) angrenzt.

4. Fahrzeugaufbaueinheit (100) nach einem der Ansprüche 1 bis 3, **dadurch gekennzeichnet, dass** die Versteifung (114) ein Wellblech ist.

5. Kraftfahrzeug, umfassend eine Fahrzeugaufbaueinheit (100) nach einem der vorhergehenden Ansprüche.
